# EUROPEAN PATENT APPLICATION

(11) **EP 0 537 910 A2**
(43) Date of publication of application: **21.04.1993**
(21) Application number: 92308548.4
(22) Date of filing: 18.09.1992
(51) Int. Cl.: C09D 157/04, C08F 222/00, C08F 220/54, C09D 133/06

(54) **Solvent resistant latex paint**

(30) Priority: 18.10.1991 US 780743
(71) Applicant: ROHM AND HAAS COMPANY, Philadelphia Pennsylvania 19105 (US)
(72) Inventor: McGee, Dennis Emmett, Penfield, NY 14526 (US)
(74) Representative: Angell, David Whilton

(57) **Abstract**

A binder for latex paints is produced by admixing an emulsion copolymer with an aqueous solution copolymer formed by the copolymerization of a mixture of an olefinically unsaturated polycarboxylic acid, an olefinically unsaturated carboxylic acid hydroxy ester, and an olefinically unsaturated amide. Use of the binder results in latex paints having greatly enhanced resistance to organic solvents and greatly improved adhesion to substrates.

## Description

### Field of the Invention

This invention relates to latex paints. In one of its more particular aspects, it relates to enhancing the solvent resistance of latex paints.

### Background of the Invention

Latex paints are a mixture of a multitude of ingredients, typically including materials which function as some or all of the following: coalescing aids, thickening aids, dispersing aids, defoamers, biocides, fillers, pigments and binders. Other ingredients are sometimes employed in formulating latex paints to enhance specific properties of paints intended for specialized uses. For example, wet adhesion promoters may be employed to enhance a paint's adherence to a particular substrate, and cross-linking agents may be employed to improve the solvent resistance of paints. Since the employment of any additional ingredient in a latex paint may adversely affect other properties of the paint or make it more difficult to formulate, it would be desirable to provide a latex paint possessing the properties of excellent adhesion and solvent resistance without having to incorporate a wet adhesion promoter and a cross-linking agent into the paint.

### Summary of the Invention

In accordance with the present invention, the properties of solvent resistance and improved adhesion are imparted to a latex paint by the incorporation of a binder comprising a mixture of an emulsion copolymer and an aqueous solution copolymer. The resulting latex paint is characterized by greatly enhanced resistance to organic solvents and greatly improved adherence to substrates upon which the paint is coated.

### Detailed Description of the Invention

The latex paint of the present invention comprises a binder formed by mixing certain types of emulsion copolymers with certain aqueous solution copolymers. The aqueous solution copolymer is present in the mixture of emulsion copolymer and aqueous solution copolymer, which constitutes the binder, in an amount of about 2 percent to about 20 percent by weight and preferably about 3 percent to about 5 percent.

The emulsion copolymer used in the binder of the latex paint of the present invention comprises a copolymer prepared by the emulsion polymerization of a mixture of copolymerizable olefinically unsaturated comonomers. Such comonomers as the C₁ to C₈ saturated esters of acrylic and methacrylic acid, for example, methyl acrylate, butyl acrylate, and methyl methacrylate; vinylidene chloride; and vinyl compounds, such as vinyl chloride, vinyl acetate, and styrene can be used to prepare the emulsion copolymer. Typical emulsion copolymers include acrylic copolymers and polyvinylidene halide copolymers.

The emulsion copolymer is mixed with an aqueous solution copolymer formed by the copolymerization in aqueous solution of a mixture containing at least 2 water soluble comonomers.

The first of these water soluble comonomers contains at least one olefinically unsaturated linkage and at least two carboxyl groups, said comonomer having the general formula: 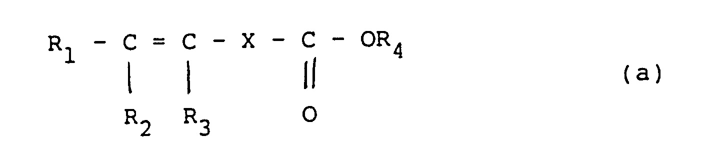
wherein R₁, R₂, and R₃ are independently hydrogen, halogen, nitro, amino, and organic radicals, usually of no more than 10 carbon atoms; R₄ is hydrogen or an organic radical, usually containing no more than about 10 carbon atoms; and X is a covalent bond or an organic radical, usually of no more than about 10 carbon atoms. Normally, the number of all the carbon atoms in comonomer (a) is no greater than 30. Since comonomer (a) contains at least two carboxyl groups, at least one of R₁, R₂, and R₃ must contain a carboxyl group when R₄ is hydrogen or an organic radical containing a carboxyl group, and at least two of R₁, R₂, and R₃ must contain carboxyl groups when R₄ is other than hydrogen or an organic radical containing a carboxyl group.

The term "organic" radical, when used herein, broadly refers to any carbon-containing radical. Such radicals may be cyclic or acyclic, may have straight or branched chains, and can contain one or more hetero atoms such as sulfur, nitrogen, oxygen, phosphorus, and the like. Further, they may be substituted with one or more substituents such as thio, hydroxy, nitro, amino, cyano, carboxyl or halogen. In addition to aliphatic chains, they may contain aryl radicals, including arylalkyl and alkylaryl radicals; and cycloalkyl radicals, including alkyl-substituted cycloalkyl and cycloalkyl-substituted alkyl radicals, with such radicals, if desired, being substituted with any of the substituents listed above. When cyclic radicals are present, whether aromatic or nonaromatic, it is preferred that they have only one ring. Preferred organic radicals are, in general, free of olefinic and acetylenic linkages and also free of aromatic radicals.

The term "water soluble" shall denote a solubility in an amount of at least 2.5 percent by weight in deionized water at a temperature of about 90°C. Preferably the comonomers are soluble in water to the extent of at least 5 percent, and most preferably at least 15 percent by weight.

In comonomer (a), it is preferred that R₁, R₂, and R₃ be hydrogen or unsubstituted cycloalkyl or unsubstituted, straight or branched chain alkyl radicals which have no more than 7 carbon atoms, with the exception that at least one of R₁, R₂, and R₃ must either be or bear a group, 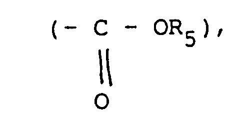
wherein R₅ is hydrogen or an organic radical, usually having no more than about 10 carbon atoms. In any event, compound (a) must contain at least two carboxyl groups.

More preferably, R₁, R₂, and R₃, except for the group or groups being or bearing the carboxyl or carboxylate group or groups, are hydrogen or unsubstituted, straight or branched chain alkyl radicals having no more than 5 carbon atoms. When X is an organic radical, it preferably has no more than 6 carbon atoms and is an unsubstituted, branched or unbranched chain alkyl or unsubstituted cycloalkyl radical and, when an alkyl radical, is most preferably unbranched.

In the most preferred form of all, comonomer (a) is a dicarboxylic acid wherein R₁, R₂, and R₃ are all independently hydrogen, carboxyl groups, or methyl or ethyl radicals, either unsubstituted or substituted with a carboxyl group, provided that R₁, R₂, and R₃ comprise, in total, one carboxyl group where R₄ is hydrogen or an organic radical containing a carboxyl group and two carboxyl groups where R₄ is other than hydrogen or an organic radical containing a carboxyl group. Most preferred for R₄ and R₅ are hydrogen or unsubstituted alkyl radicals or unsubstituted cycloalkyl radicals. Most preferred for X is a covalent bond.

In particular regard to the most preferred embodiment of the water-soluble comonomer (a), it is preferred that, except for the carboxyl and carboxylate groups, the remainder of the compound be unsubstituted, that is, consist of only carbon and hydrogen atoms, and that the maximum number of carbon atoms in the compound be 27; with R₁ and R₂ combined having no more than 9 carbon atoms, and R₃ no more than 8 carbon atoms; with R₄ and R₅ each having no more than 7 carbon atoms. In the very most preferred embodiment, each side of the olefinic linkage has no more than about 5 carbon atoms and both of R₄ and R₅ are hydrogen.

Suitable copolymerizable, water-soluble comonomers (a) according to the above most preferred description include monoolefinically unsaturated diacids, such as methylenesuccinic acid (itaconic acid), the cis- and trans- forms of butenedioic acid (maleic and fumaric acids), both the cis- and trans- forms (where such exist) of the diacids resulting when one or more of the hydrogen atoms on the carbon chains of maleic/fumaric acid or itaconic acid is replaced with a methyl or ethyl radical, and the C₁ to C₅ semi-esters thereof. Of these, itaconic acid is most preferred.

The other water soluble comonomers are either water soluble hydroxy esters or water soluble amides or both in combination.

The hydroxy ester comonomers comprise one or more water soluble compounds having the general formula: 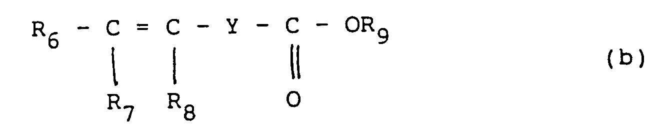
wherein R₆, R₇ and R₈ are independently selected from hydrogen, halogen, nitro, amino, and organic radicals, usually of no more than 10 carbon atoms; R₉ is an organic radical having at least 2, and usually no more than 10, carbon atoms, with at least one of R₆, R₇, R₈, and R₉ being an organic radical having a hydroxyl substituent thereon, said hydroxyl substituent being at least 2 carbon atoms away from the carboxylate group. Where one or more of R₆, R₇, and R₈ are organic radicals having a hydroxyl substituent, R₉ is preferably an unsubstituted hydrocarbyl radical, usually of no more than 10 carbon atoms. Y is a covalent bond or an organic radical, usually of no more than about 10 carbon atoms.

For compound (b), it is preferred that R₆, R₇, and R₈ be free of hydroxyl and carboxylate substituents and, even more preferably, that they be hydrogen or unsubstituted cycloalkyl or unsubstituted, straight or branched chain alkyl groups which have no more than 7 carbon atoms. Most preferably, R₆, R₇, and R₈ are hydrogen or unsubstituted, straight or branched chain alkyl groups having no more than 5 carbon atoms. In the very most preferred form of all, R₆, R₇, and R₈ are all independently ethyl, methyl, or hydrogen. R₉ is also preferably free of carboxylate groups and is most preferably an alkyl or cycloalkyl group, substituted at least 2 carbon atoms away from the carboxylate group with a hydroxyl group. When Y is an organic radical, it is preferably a branched or unbranched, unsubstituted alkyl or unsubstituted cycloalkyl group with no more than about 6 carbon atoms and, when an alkyl group, is preferably unbranched. However, most preferred for Y is a covalent bond.
Preferred polymerizable, water-soluble, unsaturated compounds according to the above most preferred description for compound (b) are the hydroxy alkyl and hydroxy cycloalkyl esters of acrylic and methacrylic acids, and while the esterifying moiety must have at least 2 carbon atoms, it preferably has no more than about 6, and, more preferably, no more than about 4 carbon atoms. Of the hydroxy alkyl and hydroxy cycloalkyl esters of acrylic and methacrylic acids meeting these criteria, 2-hydroxyethyl acrylate and hydroxypropyl methacrylate are most preferred.

The amide comonomers comprise one or more water soluble compounds having the general formula: 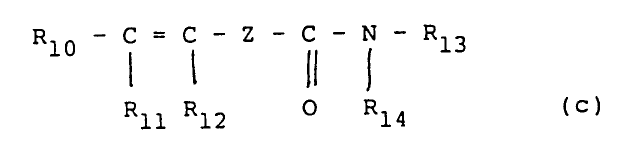
wherein R₁₀, R₁₁, and R₁₂ are independently selected from hydrogen, halogen, nitro, amino, and organic radicals, usually of no more than 10 carbon atoms; R₁₃ and R₁₄ are hydrogen or organic radicals having no more than 6 carbon atoms; and Z is a covalent bond or an organic radical, usually of no more than about 10 carbon atoms.
For compound (c), it is preferred that R₁₀, R₁₁, and R₁₂ be free of carboxylate substituents and, even more preferably, that they be hydrogen or unsubstituted cycloalkyl or unsubstituted, straight or branched chain alkyl groups which have no more than 7 carbon atoms. Most preferably, R₁₀, R₁₁, and R₁₂ are hydrogen or straight or branched chain, unsubstituted alkyl groups having no more than 5 carbon atoms. In the very most preferred form of all, R₁₀, R₁₁, and R₁₂ are all independently ethyl, methyl, or hydrogen. Preferred for R₁₃ and R₁₄ are hydrogen or unsubstituted, branched or unbranched alkyl or unsubstituted cycloalkyl groups each having no more than 6 carbon atoms, provided that at least one of R₁₃ and R₁₄ is hydrogen. When Z is an organic radical, it is preferably an unsubstituted, branched or unbranched alkyl or cycloalkyl group with no more than about 6 carbon atoms and, when an alkyl group, is more preferably unbranched. However, most preferred for Z is a covalent bond.

Preferred polymerizable water-soluble, unsaturated compounds according to the above most preferred description for formula (c) are the primary and secondary amides of acrylic and methacrylic acid, with R₁₃ being hydrogen and R₁₄ being either hydrogen, methyl, or ethyl. Of the amides meeting these criteria, acrylamide is most preferred.

The copolymerization is conducted with a greater proportion of comonomer (a) than either comonomer (b) or comonomer (c). Typically, the copolymerization utilizes about 40 percent to about 60 percent of comonomer (a) by weight of total monomers, with the balance comprising comonomer (b) or comonomer (c) or a mixture of comonomers (b) and (c).

Where comonomers (a), (b), and (c) are copolymerized to form a solution copolymer, that is, where the balance of the mixture of comonomers other than the olefinically unsaturated polycarboxylic acid comonomer consists essentially of a mixture of both an olefinically unsaturated carboxylic acid hydroxy ester and an olefinically unsaturated amide, the carboxylic acid hydroxy ester and amide can be used in any desired proportions to make up the balance of comonomers used with comonomer (a). For example, as little as about 1% hydroxy ester and about 49% amide to about 49% hydroxy ester and about 1% amide can be used. However, substantially equal proportions of hydroxy ester and amide have been found to be particularly effective in producing the combination of enhanced adhesion and solvent resistance desired in the paint binders of this invention. Preferably, the comonomeric mixture comprises between about 20 percent and about 30 percent of each of comonomers (b) and (c) and about 40 percent to about 60 percent of comonomer (a). More preferably, the comonomeric mixture comprises between about 25% and about 27% of each of comonomers (b) and (c) and about 46% to about 50% of comonomer (a).

Suitable copolymers of comonomers (a), (b), and (c) can be prepared by either thermal or, preferably, free-radical initiated solution polymerization methods. Further, the reaction may be conducted by batch, semibatch, or continuous procedures, which are well known for use in conventional polymerization reactions. Where free-radical polymerization is used, illustrative procedures suitable for producing aqueous copolymer solutions typically involve gradually adding simultaneously the comonomers to be copolymerized to an aqueous reaction medium at rates proportional to the respective percentage of each comonomer in the finished copolymer and initiating and continuing said copolymerization with a suitable polymerization catalyst. Optionally, one or more of the comonomers can be added disproportionately throughout the polymerization so that the copolymer formed during the initial stages of copolymerization will have a composition differing from that formed during the intermediate and later stages of the same copolymerization.

Illustrative water-soluble, free-radical initiators are hydrogen peroxide and an alkali metal (sodium, potassium, or lithium) or ammonium persulfate, or a mixture of such an initiator in combination with a reducing agent activator, such as a sulfite, more specifically an alkali metabisulfite, hyposulfite or hydrosulfite, glucose, ascorbic acid, erythorbic acid or other reducing agent, to form a "redox" system. Normally the amount of initiator used ranges from about 0.01 percent to about 5 percent, by weight, based on the comonomer charge. In a redox system, a corresponding range (about 0.01 to about 5 percent) of reducing agent is normally used.

The copolymerization, once started, is continued, with agitation, at a temperature sufficient to maintain an adequate reaction rate until most, or all, of the comonomers are consumed and until the solution reaches a polymer solids concentration between about 5 percent and about 40 percent, by weight. Reaction temperatures in the range of about 10°C to about 100°C will yield satisfactory polymeric compositions. When persulfate systems are used, the solution temperature is normally in the range of about 60°C to about 100°C, while in redox systems the temperature is normally in the range of about 10°C to about 70°C and preferably about 30°C to about 60°C. At this point, the solution normally will have a viscosity in the range between about 10 cps and about 1000 cps at a solids content of 15 percent at pH 3.

In general, the aqueous solution copolymer is used with the emulsion copolymer in an amount of about 2 percent to about 20 percent by weight. Preferably, the solution copolymer is present in a concentration of about 3 percent to about 5 percent. The desired amount of solution copolymer is added to the emulsion copolymer, and the pH of the resulting blend is adjusted to about pH 5 to about pH 9 prior to mixing with the other ingredients of the paint.

Latex paints are generally formulated with a coalescing aid, a thickening aid, a dispersing aid, a defoamer, a biocide, a filler, and a pigment in addition to the binder described above. Coalescing aids, thickening aids, dispersing aids, defoamers, biocides, fillers, and pigments suitable for use in latex paints are well known to those skilled in the art.

Latex paints formulated using the above-described mixture of an emulsion copolymer and an aqueous solution copolymer as a binder are characterized by greatly enhanced resistance to organic solvents and greatly improved adhesion to a variety of substrates. For example, whereas test panels painted with a conventional latex paint displayed a total lifting of the paint from the panel after as little as 10 to 15 minutes soaking in toluene, latex paints incorporating the binders of the present invention displayed no coating lift after as much as 3 hours soaking in toluene. The paint adheres to its substrate to such an extent that the coating can be abraded, such as by rubbing with a paper towel, without damaging the coating. Furthermore, the coating is effective to protect metal substrates from corrosion in the vicinity of a scribe or other physically produced defect. Even if the paint coating is softened by exposure to an organic solvent, such as toluene, and then scratched to produce a defect, the adherence of the paint is so markedly improved by incorporation of a binder comprising an emulsion copolymer and an aqueous solution copolymer, in accordance with the present invention, that upon removal from the solvent and drying, the paint will regain its toughness and become effective to protect the substrate upon which it is coated.

The invention willl be better understood by reference to the following examples which are intended to illustrate the invention without limiting the scope thereof, which is defined in the appended claims.

The following example illustrates the preparation of an aqueous solution copolymer comprised of itaconic acid, acrylamide, and 2-hydroxyethyl acrylate.

### EXAMPLE 1

A mixture of 220 grams itaconic acid, 110 grams acrylamide, 110 grams 2-hydroxyethyl acrylate, and 2470 grams of deionized water was charged to a reactor and heated to a temperature of 79°C (175°F), after which a solution of an initiator, 4.4 grams of ammonium persulfate dissolved in 40 grams of deionized water, was added. This mixture was then heated at 79°C (175°F) for 3 hours, after which a second equal portion of ammonium persulfate was bombed into the reactor and the temperature was maintained at 79°C (175 F) for another 3 hours. The resulting solution copolymer was then cooled. The solution copolymer at pH 3.8 had a viscosity of 40 cps at 15% solids. At pH 4.0 the solution copolymer had a viscosity of 82 cps at 20% solids.

The following example illustrates a paint prepared with a binder comprising a styrene-butyl acrylate emulsion copolymer and the aqueous solution copolymer of Example 1.

### EXAMPLE 2

A styrene-butyl acrylate emulsion copolymer comprising 48.8 parts butyl acrylate, 47.1 parts styrene, 2.6 parts acrylic acid, and 1.5 parts acrylamide at pH 7.5 having a viscosity of 5500 cps at 50% total solids was mixed with 5%, by weight of the emulsion copolymer, of the 15% total solids aqueous solution copolymer of Example 1 to form a binder. A quantity of 13.5 parts of the binder was mixed with 10.9 parts of an acrylic pigment paste, 0.3 part methyl carbitol, and 0.13 part cellulosic thickener.

Steel panels were coated with paints formulated with the binder containing both the styrene-butyl acrylate emulsion copolymer and the aqueous solution copolymer or with a binder containing only the styrene-butyl acrylate emulsion copolymer, and dried for 4 days. The panels were then scribed with a sharp tool and soaked in toluene for 15 minutes. The paints on the panels coated with paints containing only the styrene-butyl acrylate emulsion copolymers lifted completely from the panels. In the case of the paints containing both the styrene-butyl acrylate emulsion copolymers and the aqueous solution copolymers, in accordance with the present invention, no paint lifted from the panels after soaking in toluene for 3 hours. After 24 hours the coating still maintained its integrity, although there was considerable swelling of the coating in areas immediately adjacent to the scribes.

This invention may be embodied in other forms without departing from the spirit or essential characteristics thereof. For example, it is recognized that, while the description of the present invention and the preferred embodiments thereof are directed toward certain emulsion copolymers, other emulsion copolymers can be used as well. Consequently, the present embodiments and examples are to be considered only as being illustrative and are not restrictive, with the scope of the invention being indicated by the appended claims. All embodiments which come within the scope and equivalency of the claims are, therefore, intended to be embraced therein.

## Claims

1. A binder for paints comprising an admixture of an emulsion copolymer and the product of copolymerization, in aqueous solution, of a mixture comprising:
one or more water soluble carboxylic acids of the formula: 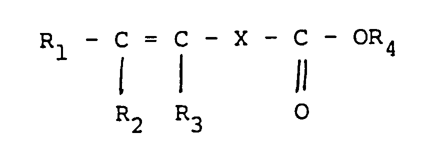 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is hydrogen or an organic radical containing a carboxyl group, at least one of R₁, R₂, and R₃ must contain a carboxyl group, and, where R₄ is other than hydrogen or an organic radical containing a carboxyl group, at least two of R₁, R₂, and R₃ must contain carboxyl groups; and
one or more members selected from the group consisting of:
water soluble hydroxy esters of the formula: 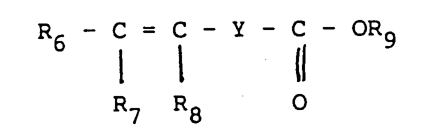 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the carboxylate group; and Y is a covalent bond or an organic radical; wherein said hydroxy esters are different compounds from said carboxylic acids;
and water soluble amides of the formula: 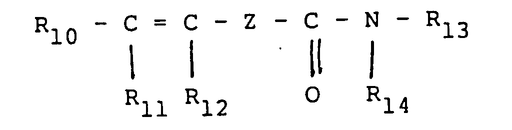 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical;
said product of copolymerization being present in said admixture in an amount of about 2% to about 20% by weight of said admixture.

2. A binder according to claim 1 wherein said emulsion copolymer comprises copolymerized comonomers selected from the group consisting of the C₁ to C₈ saturated esters of acrylic and methacrylic acids, vinylidene chloride, vinyl chloride, vinyl acetate, and styrene.

3. A binder according to claim 1 wherein said emulsion copolymer is a member selected from the group consisting of acrylic copolymers and polyvinylidene halide copolymers.

4. A binder according to claim 1 wherein said emulsion copolymer is a styrene-butyl acrylate copolymer.

5. A binder according to claim 1 wherein said emulsion copolymer comprises copolymerized butyl acrylate, styrene, acrylic acid, and acrylamide.

6. A binder according to claim 1 wherein said organic radicals are free of olefinic and acetylenic linkages.

7. A binder according to claim 1 wherein said organic radicals contain no more than about 10 carbon atoms.

8. A binder according to claim 1 wherein said organic radicals are selected from the group consisting of straight and branched chain alkyl, substituted and unsubstituted aryl, arylalkyl, alkylaryl, cycloalkyl, alkyl-substituted cycloalkyl, and cycloalkyl-substituted alkyl radicals, said radicals having no more than one ring.

9. A binder according to claim 1 wherein R₁, R₂, R₃, R₆, R₇, and R₈ are independently hydrogen or unsubstituted cycloalkyl or straight or branched chain alkyl radicals and have no more than about 7 carbon atoms.

10. A binder according to claim 1 wherein R₁, R₂_{,} R₃, R₆, R₇, R₈, R₁₀, R₁₁, and R₁₂ are independently ethyl, methyl or hydrogen.

11. A binder according to claim 1 wherein at least one of R₁, R₂ and R₃ either is a 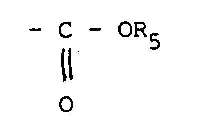 group or bears such a group, wherein R₅ is hydrogen or an organic radical.

12. A binder according to claim 11 wherein the maximum number of carbon atoms in the carboxylic acid is 27, with R₁ and R₂ combined having no more than 9 carbon atoms, R₃ having no more than 8 carbon atoms; and R₄ and R₅ each having no more than 7 carbon atoms.

13. A binder according to claim 11 wherein R₄ and R₅ are hydrogen.

14. A binder according to claim 1 wherein the carboxylic acid is selected from the group consisting of the cis- and trans- forms of butenedioic acid, methylenesuccinic acid, the diacids resulting when one or more of the hydrogen atoms on the carbon chains of butenedioic acid or methylenesuccinic acid is replaced with a methyl or ethyl radical, and the C₁ to C₅ semi-esters of said acids.

15. A binder according to claim 1 wherein the carboxylic acid is itaconic acid.

16. A binder according to claim 1 wherein R₆, R₇, and R₈ are independently selected from the group consisting of hydrogen, methyl or ethyl; and R₉ is a hydroxyalkyl radical having from 2 to 6 carbon atoms.

17. A binder according to claim 16 wherein R₉ has from 2 to 4 carbon atoms and Z is a covalent bond.

18. A binder according to claim 1 wherein the hydroxy ester is a member selected from the group consisting of hydroxy alkyl and hydroxy cycloalkyl esters of acrylic and methacrylic acids.

19. A binder according to claim 1 wherein the hydroxy ester is a member selected from the group consisting of 2-hydroxyethyl acrylate and hydroxypropyl methacrylate.

20. A binder according to claim 1 wherein the hydroxy ester is 2-hydroxyethyl acrylate.

21. A binder according to claim 1 wherein R₁₀, R₁₁, and R₁₂ are hydrogen or unsubstituted cycloalkyl or unsubstituted straight or branched chain alkyl radicals having no more than 7 carbon atoms.

22. A binder according to claim 1 wherein R₁₀, R₁₁, R₁₂, and R₁₃ are selected from the group consisting of hydrogen, methyl, and ethyl, and R₁₄ is hydrogen.

23. A binder according to claim 1 wherein the amide is a member selected from the group consisting of the primary and secondary amides of acrylic and methacrylic acids.

24. A binder according to claim 1 wherein the amide is acrylamide.

25. A binder according to claim 1 wherein the carboxylic acid is itaconic acid, the hydroxy ester is 2-hydroxyethyl acrylate, and the amide is acrylamide.

26. A binder according to claim 1 wherein the carboxylic acid is present in said mixture in an amount of about 40% to about 60%, by weight of total monomers.

27. A binder according to claim 26 wherein the hydroxy ester is present in said mixture in an amount of about 1% to about 49% and the amide is present in said mixture in an amount of about 49% to about 1%, by weight of total monomers.

28. A binder according to claim 26 wherein the hydroxy ester is present in said mixture in an amount of about 20% to about 30% and the amide is present in said mixture in an amount of about 30% to about 20%, by weight of total monomers.

29. A binder according to claim 1 wherein the carboxylic acid is present in said mixture in an amount of about 46% to about 50%, the hydroxy ester in an amount of about 25% to about 27%, and the amide in an amount of about 27% to about 25%, by weight of total monomers.

30. A binder for paints comprising an admixture of an emulsion copolymer and the product of copolymerization, in aqueous solution, of a mixture comprising:
one or more water soluble carboxylic acids of the formula: 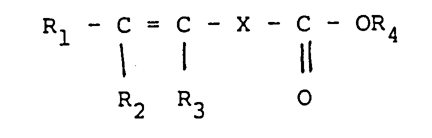 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is hydrogen or an organic radical containing a carboxyl group, at least one of R₁, R₂, and R₃ must contain a carboxyl group, and, where R₄ is other than hydrogen or an organic radical containing a carboxyl group, at least two of R₁, R₂, and R₃ must contain carboxyl groups;
one or more water soluble hydroxy esters of the formula: 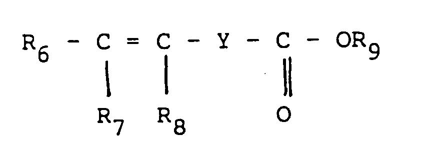 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the carboxylate group; and Y is a covalent bond or an organic radical; wherein said hydroxy esters are different compounds from said carboxylic acids; and
one or more water soluble amides of the formula: 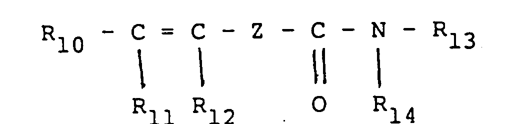 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical;
said product of copolymerization being present in said admixture in an amount of about 2% to about 20% by weight of said admixture.

31. A process for preparing a binder for paints comprising:
(a) copolymerizing, in aqueous solution, a mixture comprising:
one or more water soluble carboxylic acid comonomers of the formula: 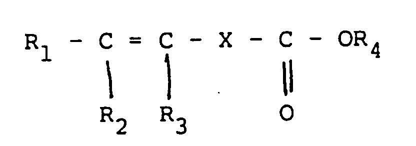 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is hydrogen or an organic radical containing a carboxyl group, at least one of R₁, R₂, and R₃ must contain a carboxyl group, and, where R₄ is other than hydrogen or an organic radical containing a carboxyl group, at least two of R₁, R₂, and R₃ must contain carboxyl groups; and
one or more members selected from the group consisting of:
water soluble hydroxy esters of the formula: 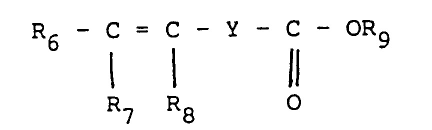 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the carboxylate group; and Y is a covalent bond or an organic radical; wherein said hydroxy esters are different compounds from said carboxylic acids;
and water soluble amides of the formula: 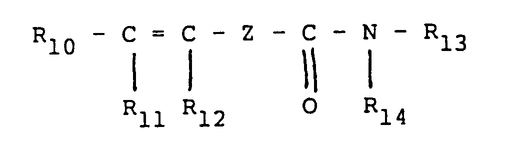 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical; and
(b) admixing the resulting aqueous solution copolymer with an emulsion copolymer, said solution copolymer being present in the admixture in an amount of about 2% to about 20% by weight of said admixture.

32. A process according to claim 31 wherein the carboxylic acid is itaconic acid, the hydroxy ester is 2-hydroxyethyl acrylate, and the amide is acrylamide.

33. A process for preparing a binder for paints comprising:
(a) copolymerizing, in aqueous solution, a mixture comprising:
one or more water soluble carboxylic acid comonomers of the formula: 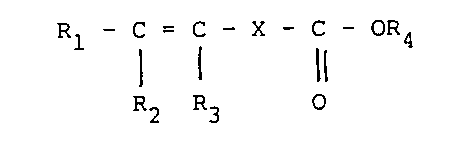 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is hydrogen or an organic radical containing a carboxyl group, at least one of R₁, R₂, and R₃ must contain a carboxyl group, and, where R₄ is other than hydrogen or an organic radical containing a carboxyl group, at least two of R₁, R₂, and R₃ must contain carboxyl groups;
one or more water soluble hydroxy esters of the formula: 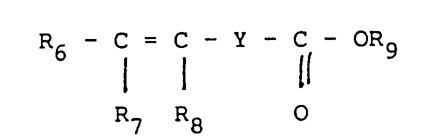 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the carboxylate group; and Y is a covalent bond or an organic radical; wherein said hydroxy esters are different compounds from said carboxylic acids; and
one or more water soluble amides of the formula: 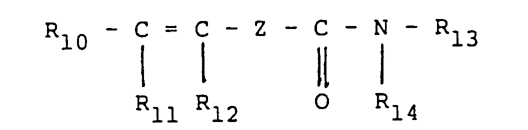 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical; and
(b) admixing the resulting aqueous solution copolymer with an emulsion copolymer, said solution copolymer being present in the admixture in an amount of about 2% to about 20% by weight of said admixture.

34. A process according to claim 33 wherein the carboxylic acid is itaconic acid, the hydroxy ester is 2-hydroxyethyl acrylate, and the amide is acrylamide.

35. A latex paint comprising:
(a) a coalescing aid,
(b) a thickening aid,
(c) a dispersing aid,
(d) a defoamer,
(e) a biocide,
(f) a filler, and
(g) a binder, with said binder comprising the binder of claim 1.

36. A film formed by drying the latex paint of claim 35.

37. An article comprising a substrate having a surface, wherein at least a portion of the surface is coated with the film of claim 36.

38. A latex paint comprising:
(a) a coalescing aid,
(b) a thickening aid,
(c) a dispersing aid,
(d) a defoamer,
(e) a biocide,
(f) a filler, and
(g) a binder, with said binder comprising the binder of claim 30.

39. A film formed by drying the latex paint of claim 38.

40. An article comprising a substrate having a surface, wherein at least a portion of the surface is coated with the film of claim 39.
